# EUROPEAN PATENT SPECIFICATION

(11) **EP 3 039 185 B1**
(45) Date of publication and mention of the grant of the patent: **25.03.2020**
(21) Application number: 14780770.5
(22) Date of filing: 01.09.2014
(51) Int. Cl.: D21H 19/24, D21H 19/60, D21H 21/14, D21H 19/38, D21H 19/40, C09D 11/10, C09D 129/04, B32B 27/30, B32B 27/18, B32B 27/10, B32B 29/00

(54) **PRINTABLE BARRIER COATING**
BEDRUCKBARE SPERRBESCHICHTUNG
REVÊTEMENT BARRIÈRE IMPRIMABLE

(30) Priority: 30.08.2013 GB 201315459
(43) Date of publication of application: 06.07.2016
(73) Proprietor: Multi Packaging Solutions UK Limited, Nottinghamshire NG8 6AW (GB)
(72) Inventor: HAMMOND, Carol, Nottingham Nottinghamshire NG8 6AW (GB); MARWICK, Bill, Nottingham Nottinghamshire NG8 6AW (GB)
(74) Representative: Dehns
(86) International application number: PCT/EP2014/068517
(87) International publication number: WO 2015/028667

(56) References cited:
- EP-A1- 2 532 706
- WO-A1-2013/017857
- US-A1- 2010 112 226
- US-A1- 2011 132 975

## Description

### PRINTING PROCESS

The present invention relates to improved printing processes for applying barrier coatings for paper substrates, and to paper substrates made by such processes.

### BACKGROUND OF THE INVENTION

Packaging materials for sensitive substances such as food are often made from paperboard substrates which have a barrier coating to protect the contents from the packaging. The barrier coating can help prevent substances such as water or oils leaching from the food substance into the packaging material thereby spoiling the decorative surface of the material, or alternatively protect the food material itself from substances which may leach through the packaging and into the contents.

One particular problem that has been identified in the art is the leaching of mineral oil from paperboard substrates used as food containers. Thus, mineral oil is typically present in paperboard packaging materials due to the ink and other treatment agents present on the original paper source used to make the paperboard substrate. Typically, mineral oil will be present at levels of around 400 ppm in paperboard substrates, and is typically made up of around 25 weight percent mineral oil aromatic hydrocarbons (MOAH) and 75 percent mineral oil saturated hydrocarbons (MOSH). At these levels, mineral oil cannot generally be regarded as a "trace" contaminant and there is growing concern that leaching of mineral oils into food substances may pose a health risk.

At present, there is no statutory requirement for the amounts of MOAH and MOSH contamination in food. However, it is likely that the European authorities will soon regulate the amount of these contaminants that may be present. In the USA, some pure MOSH compounds are permitted in the FDA Regulations. However, given that many MOAH components (e.g. alkylated benzenes and phenanthrenes) are known carcinogens, it is inevitable that regulations governing the amounts of these components will soon be introduced. The Joint Expert Committee on Food Additives (JECFA) has recommended a maximum Acceptable Daily Intake (ADI) of medium and low viscosity mineral oils of 0.01 mg/kg. A proposed regulation in Germany will limit food contamination to less than 150 ppb by weight.

There are several proposed solutions to mitigate mineral oil contamination due to leaching. For example, in Switzerland the use of recycled fibre in food packaging is no longer allowed. Another solution is to treat the pulp to remove inks prior to forming paperboard, or even reformulating inks to avoid mineral oil being included.

Another possible solution is to minimise leaching by coating the paperboard with an impermeable barrier coating. To date, paper, polyethylene and propylene liners have been found not to work or not to work efficiently. Other proposals include the use of PET and aluminium foil liners. However, it has been suggested that the direct contact of food and aluminium may present other adverse health risks. Moreover, all of these methods suffer from higher costs.

Barrier coatings made from alcohol binders such as polyvinyl alcohol (PVOH) together with a plate-like filler such as kaolin have been disclosed in WO2013/017857. The examples show that boards coated with PVOH/kaolin mixtures at levels of about 5 g/m² show acceptable barrier properties. While the resultant barriers are promising, the printing methodologies used in the examples of WO2013/017857 are not amenable to large scale, high throughput production.

In view of the foregoing, there is a need for high throughput printing processes for applying barrier coatings on food grade packaging.

### SUMMARY OF THE INVENTION

In a first aspect, the present invention is a process for forming a coated paper comprising:
providing a paper substrate;
gravure printing a coating composition on at least one surface of the paper substrate, wherein the coating composition comprises polyvinyl alcohol and an inorganic particulate,
characterised in that
the gravure cell volume is at least 50 cm³/m².

Preferably, the gravure cell depth is at least 60µm.

In a second aspect, the present invention is a process for forming a coated paper comprising:
providing a paper substrate;
gravure printing a first composition comprising a polyvinyl alcohol on at least one surface of the paper substrate;
gravure printing a second composition comprising an inorganic particulate on the polyvinyl alcohol layer; and
gravure printing a third composition comprising a polyvinyl alcohol on the layer of inorganic particulate,
wherein the gravure cell volume is from 60 to 130 cm³/m².

In such processes, the gravure cell depth is preferably at least 60 µm.

Preferably, the first and/or third compositions do not contain any inorganic particulate.

Preferably, the second composition comprises 0-20 wt% polyvinyl alcohol, at least 60 wt% inorganic particulate, and the remainder water.

A further aspect of the present disclosure relates to coated paper formed by such processes.

### DESCRIPTION OF THE FIGURES

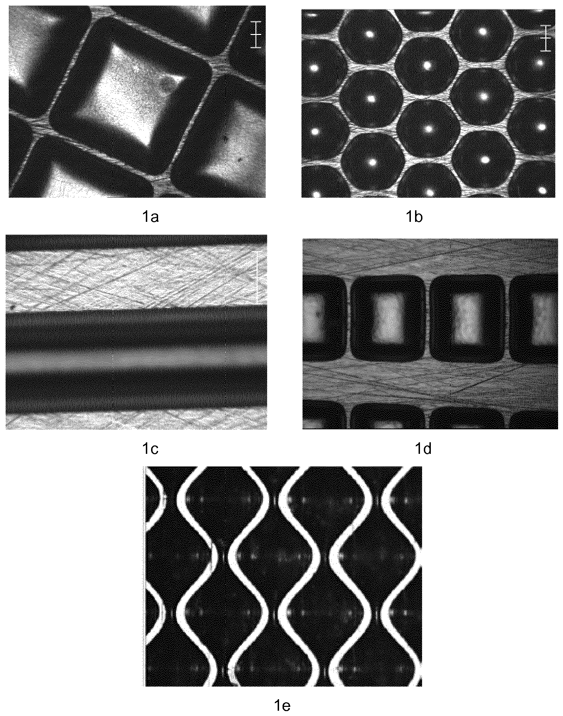

Figure 1 shows the layout of several gravure cells useful in the processes of the invention.

### DETAILED DESCRIPTION OF THE INVENTION

By "printing" is meant applying a composition onto the surface of a preformed substrate. Thus, printing does not encompass methods involving actually forming the paperboard in combination with the coating via a co-extrusion process.

The printing process used in the present invention is a rotogravure (hereinafter "gravure") method, i.e. methods where the substrate passes in between two rotating cylinders, one of which, the "gravure cylinder", transfers ink from a reservoir to the substrate while the other, the "impression roll", forces the substrate against the gravure cylinder to create a nip where the ink transfer takes place.

The compositions (i.e. the coating composition, and the first, second and third compositions mentioned above) used in the processes of the present invention typically comprise polyvinyl alcohol and/or an inorganic particulate. The coating composition comprises polyvinyl alcohol and an inorganic particulate.

### The inorganic particulate

The inorganic particulate may, for example, be an alkaline earth metal carbonate or sulphate, such as calcium carbonate, magnesium carbonate, dolomite and gypsum; an aluminosilicate such as hydrous kandite clay including kaolin, halloysite clay, ball clay, anhydrous (calcined) kandite clay such as metakaolin, fully calcined kaolin and mica; or another material such as talc, perlite, diatomaceous earth, magnesium hydroxide and aluminium trihydrate; or combinations thereof.

Preferably, the inorganic particulate is a phyllosilicate. These silicates contain parallel sheets of silicate tetrahedra that often give rise to clean basal cleavage leading to formation of flakes or plate-like particles. Preferred phyllosilicates are selected from as kaolin, montmorillonite, and bentonite; and micas such as biotite and muscovite.

Advantageously, in one embodiment, the inorganic particulate is an aluminosilicate, for example, kaolin. In another embodiment, the inorganic particulate is a magnesium silicate.

Most preferably, the inorganic particulate is kaolin.

Preferably, the inorganic particulate has a high shape factor. Kaolin having a high shape factor is particularly preferred.

A product of high shape factor is considered to be more "platy" than a product of low shape factor. "Shape factor", as used herein, is a measure of the ratio of particle diameter to particle thickness for a population of particles of varying size and shape as measured using the electrical conductivity methods, apparatuses, and equations described in U.S. Patent No. 5,576,617. As the technique for determining shape factor is further described in the '617 patent, the electrical conductivity of a composition of an aqueous suspension of orientated particles under test is measured as the composition flows through a vessel. Measurements of the electrical conductivity are taken along one direction of the vessel and along another direction of the vessel transverse to the first direction. Using the difference between the two conductivity measurements, the shape factor of the particulate material under test is determined.

The shape factor of the inorganic particulate (e.g. kaolin) may suitably be equal to or greater than about 10. For example, the shape factor may be equal or greater than about 20, or equal or greater than about 30, or equal or greater than about 40, or equal or greater than about 50, or equal or greater than about 60 or about 70. The shape factor may be equal or greater than about 80, for example equal or greater than about 90 or about 100, for example up to about 110 or about 150.

For example, the shape factor may lie in one or more of the following ranges: 20 to 150; 20 to 110; 30 to 150; 30 to 110; 40 to 150; 40 to 110; 50 to 150; 50 to 110; 60 to 150; 60 to 110; 70 to 150; 70 to 110; 80 to 150; 80 to 119; 90 to 150; 90 to 110.

Unless otherwise stated, the mean (average) equivalent particle diameter (d₅₀ value) and other particle size properties referred to herein for the inorganic particulate are as measured in a well known manner by sedimentation of the particulate material in a fully dispersed condition in an aqueous medium using a Sedigraph 5100 machine as supplied by Micromeritics Instruments Corporation, Norcross, Georgia, USA (telephone: +1 770 662 3620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (esd), less than given esd values. The mean particle size d₅₀ is the value determined in this way of the particle esd at which there are 50% by weight of the particles which have an equivalent spherical diameter less than that d₅₀ value. The term d₅₀ is the particle size value less than which there are 90% by weight of the particles.

The inorganic particulate may have a mean equivalent particle diameter (d₅₀) less than or equal to about 10 microns (µm) (by Sedigraph), e.g. less than or equal to about 8 µm, or less than or equal to about 6 µm, or less than or equal to about 4 µm, or less than or equal to about 2 µm, or less than or equal to about 1 .5 µm, particularly less than or equal to about 1 µm, e.g. less than or equal to about 0.5 µm, e.g. less than or equal to about 0.4 µm or, e.g., less than or equal to about 0.3 µm.

The value of d₅₀ may, for example, be in the range of about 0.2 µm to about 2 µm, for example about 0.3 to about 1 .5 µm, for example about 0.3 to about 1 µm, or for example about 1 µm to about 2 µm. The inorganic particulate may have a d₅₀ of less than or equal to about 5 µm, particularly less than 3 µm, e.g., less than about 2 µm. The value of d₅₀ may, for example, be in the range of about 0.5 µm to about 3 µm, for example about 1 µm to about 3 µm or, for example, about 0.5 µm to 2 µm.

The range of fine content of inorganic particulate, i.e. the wt% less than 0.25µm may lie in the range 5wt% to 95wt%, for example 40wt% to 90wt% or 5wt% to 20wt%. In an embodiment, the particulate (e.g. kaolin) has a shape factor equal to or greater than about 30 and a d₅₀ of less than about 2 µm. For example, the particulate (e.g. kaolin) may have a shape factor equal to or greater than about 60, or 70, or 90, and a d₅₀ of less than about 2 µm.

In another aspect, the particulate (e.g. kaolin) has a shape factor between about 10 and about 20 and a d₅₀ of less than about 1 µm, for example, less than or equal to about 0.5 µm.

In another aspect, the particulate (e.g. kaolin) has a shape factor between about 25 and about 50 and a d₅₀ of less than about 0.3 µm.

In another aspect, the inorganic particulate is an aluminosilicate having a shape factor between about 20 and 40, and a d₅₀ of less than about 0.5 µm.

As noted above, the most preferred inorganic particulate is kaolin, which is a type clay comprising kaolinite. Kaolin clay used in this invention may be a processed material derived from a natural source, namely raw natural kaolin clay mineral. The processed kaolin clay may typically contain at least about 50% by weight kaolinite. For example, most commercially processed kaolin clays contain greater than about 75% by weight kaolinite and may contain greater than about 90%, in some cases greater than about 95% by weight of kaolinite.

Kaolin clay used in the present invention may be prepared from the raw natural kaolin clay mineral by one or more other processes which are well known to those skilled in the art, for example by known refining or beneficiation steps.

For example, the clay mineral may be bleached with a reductive bleaching agent, such as sodium hydrosulphite. If sodium hydrosulphite is used, the bleached clay mineral may optionally be dewatered, and optionally washed and again optionally dewatered, after the sodium hydrosulphite bleaching step.

The clay mineral may be treated to remove impurities, e. g. by flocculation, flotation, or magnetic separation techniques well known in the art. Alternatively the clay mineral used in the first aspect of the invention may be untreated in the form of a solid or as an aqueous suspension.

The process for preparing the particulate kaolin clay used in the present invention may also include one or more comminution steps, e.g., grinding or milling. Light comminution of a coarse kaolin is used to give suitable delamination thereof. The comminution may be carried out by use of beads or granules of a plastic (e. g. nylon), sand or ceramic grinding or milling aid. The coarse kaolin may be refined to remove impurities and improve physical properties using well known procedures. The kaolin clay may be treated by a known particle size classification procedure, e.g., screening and centrifuging (or both), to obtain particles having a desired d₅₀ value or particle size distribution.

When the inorganic particulate of the present invention is obtained from naturally occurring sources, it may be that some mineral impurities will contaminate the ground material. For example, naturally occurring kaolin can be present in association with other minerals. Thus, in some embodiments, the inorganic particulate includes an amount of impurities. In general, however, the inorganic particulate material used in the invention will contain less than about 5% by weight, preferably less than about 1 % by weight, of other mineral impurities.

Commercially available kaolin that may be used in the invention are commercially available and are sold under various trade names.

### The polyvinyl alcohol binder

The binder component of the barrier coating serves not only as binder when applied to a paper product, but may also enhance the barrier properties of the barrier coating. In an advantageous embodiment of the first aspect, the water vapour transmission rate of a barrier coating composition according the present invention is improved (i.e., is reduced) compared to a barrier coating which does not comprise both an inorganic particulate and polyvinyl alcohol component as defined in accordance with the invention.

Polyvinyl alcohol may be obtained by conventional methods known in the art, such as, for example by partial or complete hydrolysis of polyvinyl acetate to remove acetate groups. Thus, a person of skill in the art will understand that polyvinyl alcohol obtained by hydrolysis of polyvinyl acetate may contain pendant acetate groups as well as pendant hydroxy groups.

Thus, in embodiments, the polyvinyl alcohol is derived from partially or fully hydrolysed polyvinyl acetate.

The extent of hydrolysis may be such that at least about 50 mole % of the acetate groups are hydrolysed, for example, at least about 60 mole % of the acetate groups are hydrolysed, for example, at least about 70 mole % of the acetate groups are hydrolysed, for example, at least about 80 mole % of the acetate groups are hydrolysed, for example, at least about 85 mole % of the acetate groups are hydrolysed, for example, at least about 90 mole % of the acetate groups are hydrolysed, for example, at least about 95 mole % of the acetate groups are hydrolysed or, for example, at least about 99 mole % of the acetate groups are hydrolysed.

Preferred ranges of hydrolysis are from about 80 to about 99 mole %, more preferably from about 85 to about 99 mole %, even more preferably about 88 to about 98 mole %.

An alternative way of defining polyvinyl alcohols derived from partially or fully hydrolysed polyvinyl acetate is by the residual acetyl content, that is the amount of the polymer still corresponding to acetyl groups.

The preferred residual acetyl content of the polyvinyl alcohol is from about 0.5 to about 15 % w/w, more preferably from about 12.5 to about 0.5 % w/w, even more preferably from about 11 to about 1 % w/w.

The compositions used in the processes of the present invention contain polyvinyl alcohol, and preferably have a viscosity of about 200 to about 5000 mPa.s, more preferably from about 500 to about 4000 mPa.s, more preferably about 750 to about 3000 mPa.s, most preferably about 1000 to about 2500 mPa.s.

The viscosity of the compositions is typically measured using a Höppler falling-ball viscometer (DIN 53 015) or at 20°C. An alternative way of measuring the viscosity is using an Ubbelohde viscometer (capillary viscometer, DIN 51 562 and DIN 53 012), again at 20°C.

As the degree of hydrolysis increases, the viscosity of the polymer in water increases. Likewise, as the molecular weight of the polymer increases, the viscosity of aqueous solutions of the polymer increases. The molecular weight and degree of hydrolysis of the polyvinyl alcohol are therefore preferably adjusted to ensure that the above-mentioned viscosities are obtained.

In other words, as would be understood by the skilled person, the invention can utilise polyvinyl alcohol having a relatively high molecular weight and a relatively low degree of hydrolysis (i.e. relatively high residual acetyl content), or a similar viscosity solution can be achieved using a relatively low molecular weight polyvinyl alcohol having a relatively high degree of hydrolysis (i.e. a low residual acetyl content). The skilled person, intent on forming a composition having a particular viscosity, would have no difficulty adjusting the molecular weight and degree of hydrolysis of the polyvinyl alcohol to achieve the desired viscosity.

However, as higher molecular weight polyvinyl alcohols provide better barrier properties, it is preferred to use a polyvinyl alcohol having relatively high molecular weight and a relatively low degree of hydrolysis (i.e. relatively high residual acetyl content).

The preferred molecular weight of the polyvinyl alcohol will therefore depend on the degree of hydrolysis as well as the desired viscosity of the composition. However, by way of guidance, preferred molecular weights for polyvinyl alcohols having a degree of hydrolysis of about 88 mole % range from about 30,000 to about 160,000 g/mol, while preferred molecular weights for polyvinyl alcohols having a degree of hydrolysis of about 98 mole % range from about 25,000 to about 130,000 g/mol.

These molecular weights are mean average molecular weights (Mw) as determined by gel permeation chromatography combined with static light scattering on reacetylised specimens. Suitable methods for reacetylising are known in the art, and include pyridine/acetic anhydride mixture.

Typically, measuring the molecular weight of polyvinyl alcohol is laborious due to the reacetylisation and subsequent steps. Consequently, it is often easier to describe the molecular weight in terms of the viscosity of a freshly prepared 4% aqueous solution using DIN 53015 standard.

Thus, preferred viscosity according to the DIN 53015 of the polyvinyl alcohol is from about 3 to about 30 mPa.s, more preferably from about 4 to about 25 mPa.s, even more preferably from about 10 to about 23 mPa.s.

Typical examples of suitable polyvinyl alcohols include Mowiol polyvinyl alcohol available from Kuraray, for example Mowiol 4-88, Mowiol 5-88, Mowiol 8-88, Mowiol 18-88, Mowiol 6-98, Mowiol 10-98, and Mowiol 20-98.

### Additional components

The compositions used in the process of the present invention may contain one or more optional additional components, if desired. Such additional components, where present, are suitably selected from known additives for paper coating compositions. Some of these optional additives may provide more than one function in the coating composition. Examples of known classes of optional additives are as follows:
(a) one or more cross linkers;
(b) one or more water retention aids;
(c) one or more viscosity modifiers or thickeners;
(d) one or more lubricity or calendering aids;
(e) one or more dispersants;
(f) one or more antifoamers or defoamers;
(g) one or more optical brightening agents (OBA) or fluorescent whitening agents (FWA);
(h) one or more dyes;
(i) one or more biocides or spoilage control agents;
(j) one or more levelling or evening aids;
(k) one or more grease or oil resistance agents;
(l) one or more surfactants;
(m) one more binders other than the polyvinyl alcohol binder defined above, for example, a latex binder such as a styrene-butadiene rubber latex, an acrylic polymer latex, a polyvinyl acetate latex, or a styrene acrylic copolymer latex, which may be carboxylated;
(n) one or more mineral fillers other than the inorganic particulate, for example an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, talc, mica, perlite or diatomaceous earth, or combinations thereof.

Any of the above additives and additive types may be used alone or in admixture with each other and with other additives, if desired. However, it is preferred that the composition does not contain a cross linker.

For all of the above additives, the percentages by weight (based on the dry weight of inorganic particulate (100%) present in the composition) can vary as understood by those skilled in the art. Where the additive is present in a minimum amount, the minimum amount may be about 0.01 % by weight based on the dry weight of the inorganic particulate.

### The coating compositions

In the first aspect, the composition used in the process according to the present invention comprises a mixture of the above defined inorganic particulate and polyvinyl alcohol, and optionally one or more further additive components, as discussed above. The composition may be in the form of an aqueous suspension of the above defined inorganic particulate and polyvinyl alcohol component, and optionally one or more further additive components, as discussed above.

In some embodiments, the coating composition used in the process consists of polyvinyl alcohol, inorganic particulate and water.

In an embodiment, the coating composition may comprise at least about 20 % by weight inorganic particulate, based on the total weight of the solids in the barrier coating composition, for example, at least about 25 % by weight inorganic particulate, for example at least about 30 % by weight inorganic particulate, for example at least about 35 % by weight inorganic particulate, for example at least about 40% by weight inorganic particulate, for example at least about 45 % by weight inorganic particulate, for example at least about 50 % by weight inorganic particulate, for example at least about 55 % by weight inorganic particulate, for example at least about 60 % by weight inorganic particulate, for example at least about 65 % inorganic particulate, for example at least about 70 % by weight inorganic particulate or, for example at least about 75 % weight inorganic particulate. In another embodiment, the barrier coating composition comprises no more than about 50 % by weight inorganic particulate. All these weight percentages are weight percent of the solids in the coating composition.

The inclusion of an inorganic particulate may advantageously provide additional benefits other than reduced liquid phase mineral oil transmission, such as, for example, making the system cheaper, improving water barrier properties (i.e., reducing moisture vapour transmission rates through coated paper products) and improving the applicability of the barrier coating composition to the paper substrate.

In an embodiment, the weight ratio of inorganic particulate to polyvinyl alcohol ranges from about 5:1 to about 1:10, for example, from about 5:1 to about 1:9, for example, from about 5:1 to about 1:7, for example, from about 5:1 to about 1:5, for example, from about 4:1 to about 1:4, for example, from about 3:1 to about 1:3, for example, from about 2:1 to about 1:2, for example, from about 1 .5: 1 to about 1:1.5, for example, from about 1.25:1 to about 1:1.25.

Particularly preferred weight ratios of inorganic particulate to polyvinyl alcohol include from about 4:1 to about 1:4, more preferably from about 3:1 to about 1:3, more preferably from about 2:1 to about 1:2, even more preferably from about 1 .5: 1 to about 1:1.5, most preferably from about 1.25:1 to about 1:1.25.

In another embodiment, the weight ratio of inorganic particulate to alcohol-based binder is about 1 :1.

Thus, viewed in another way, the preferred amount of polyvinyl alcohol and inorganic particulate in the coating composition ranges from about 20 to about 80 wt% and from about 80 to about 20 wt% respectively, based on the total solids in the composition.

More preferably, the preferred amount of polyvinyl alcohol and inorganic particulate in the coating composition ranges from about 25 to about 75 wt% and from about 75 to about 25 wt% respectively; more preferably from about 30 to about 70 wt% and from about 70 to about 30 wt% respectively; even more preferably from about 40 to about 60 wt% and from about 60 to about 40 wt% respectively, based on the total solids in the composition.

Preferably, the polyvinyl alcohol and inorganic particulate are present in the coating composition at levels of about 50 wt% each, based on the total solids in the composition.

Typically, the coating composition comprises from 10 to 40% w/v solids, preferably from 15 to 35 % w/v solids, more preferably from 18 to 30% w/v solids. The remainder of the composition is typically water.

The barrier coating composition may be prepared by mixing the polyvinyl alcohol binder, inorganic particulate, and the other optional additives (when present) in appropriate amounts into an aqueous liquid to prepare a suspension of said components. The coating composition may suitably be prepared by conventional mixing techniques, as will be known in the art. In embodiments in which the inorganic particulate is present an aqueous slurry of the inorganic particulate may be prepared using a suitable mixer, following which the slurry is blended with a solution of the polyvinyl alcohol binder. The resulting mixture may be screened prior to coating.

In a second aspect, the process of the invention uses two (or three) different types of coating compositions, referred to herein as the first composition, the second composition and the third composition.

The first composition is applied directly on the substrate and comprises a polyvinyl alcohol. Typically, the first composition does not contain any inorganic particulate.

The second composition is applied directly on the first composition and comprises inorganic particulate. Typically, the second composition does not contain any polyvinyl alcohol, although small amounts may be present to aid in the bonding of the particulate and to the adjacent layers. For example, the second composition may contain from 0 to 20 wt% polyvinyl alcohol, more preferably from 0 to 10 wt%, even more preferably from 0.1 to 8 wt%, most preferably from 1 to 5 wt%. When binder (e.g. polyvinyl alcohol) is present, the second composition generally contains a higher percentage (by weight) of inorganic particulate than polyvinyl alcohol (or binder polymers). In some aspects, the second composition is free from binder polymer. In some aspects, the second composition is free from wax.

Thus, the second binder composition preferably consists of water, inorganic particulate and from 0 to 20 wt% polyvinyl alcohol, more preferably from 0 to 10 wt%, even more preferably from 0.1 to 8 wt%, most preferably from 1 to 5 wt% polyvinyl alcohol.

The third composition is applied directly on the second composition and comprises polyvinyl alcohol. Typically, the third composition does not contain any inorganic particulate.

Considering each of these compositions in more detail, the first composition provides good adhesion to the substrate and inorganic particulate later. Typically, the first composition is a mixture of polyvinyl alcohol and water (preferably the first composition consists of polyvinyl alcohol and water) which contains from 15 to 50 % w/v polyvinyl alcohol, preferably from 20 to 40 % w/v polyvinyl alcohol, most preferably from 25 to 35 % w/v polyvinyl alcohol.

Typically, the polyvinyl alcohol used in the first composition is selected to ensure excellent barrier properties. Preferably, the polyvinyl alcohol has a degree of hydrolysis ranging from 85 to 99 mole %, more preferably about 88 to about 98 mole %.

The second composition provides an inorganic barrier layer which reduces the transmission rate of lipophilic materials. Typically, the second composition is a mixture of inorganic particulate, optionally polyvinyl alcohol and water (preferably the second composition consists of inorganic particulate, optionally polyvinyl alcohol and water) which contains at least 60 wt% inorganic particulate, preferably at least 70 wt% inorganic particulate, preferably up to 90 wt% inorganic particulate, more preferably from 75 to 90 wt % inorganic particulate, even more preferably from 80 to 90 wt % inorganic particulate. The amounts of the binder polymer (polyvinyl alcohol), if present, are as stated above.

The second composition can be applied on the first composition once it has dried. However, it is preferred to apply the second composition while the first composition has not fully dried. This ensures the first layer is flexible and the inorganic particulate is able to penetrate into it to improve adhesion between the polyvinyl alcohol and inorganic particulate layers, as well as improving flexibility in the overall production process (e.g. less time between prints to allow for complete drying).

The third composition provides good surface properties to the final substrate, as well as contributing towards the barrier properties. Typically, the third composition is a mixture of polyvinyl alcohol and water (preferably the third composition consists of polyvinyl alcohol and water) which contains from 10 to 35 % w/v polyvinyl alcohol, preferably from 10 to 30 % w/v polyvinyl alcohol, most preferably from 15 to 25 % w/v polyvinyl alcohol.

Typically, the polyvinyl alcohol has a degree of hydrolysis ranging from 85 to 99 mole %, more preferably about 88 to about 98 mole %.

The first and third compositions can be the same. However, typically the first and third compositions are different. Preferably, the third composition has a lower polymer content and a lower viscosity than the first composition. This ensures that it has better printing properties and thus forms a more even surface finish to the substrate.

### The paper substrate

The term "paper substrate", as used in connection with the present invention, should be understood to mean all forms of paper, including board such as, for example, white-lined board and linerboard, cardboard, paperboard, coated board, and the like. There are numerous types of coated paper and board which may be made according to the present invention, including paper suitable for suitable for food packaging, perishable goods other than food, e.g., pharmaceutical products and compositions. The paper may be calendered or super calendered as appropriate. Paper suitable for light weight coating (LWC), medium weight coating (MWC) or machine finished pigmentisation (MFP) may also be made according to the present methods.

Preferably, the paper product used in the process in the present invention is a board (i.e. paperboard), e.g. white-lined board, cardboard, paperboard or coated board.

The paper substrate may be formed on any material which is suitable for making a paper product therefrom. The paper substrate may be derived from any suitable source, such as wood, grasses (e.g., sugarcane, bamboo) or rags (e.g., textile waste, cotton, hemp or flax). The paper substrate may comprise pulp (i.e., a suspension of cellulose fibres in water), which may be prepared by any suitable chemical or mechanical treatment, or combination thereof.

Typically, the paper substrate comprises recycled pulp. The recycled pulp may contain MOH or MOSH or MOAH. The MOH, MOSH and MOAH may come from printing inks, which are retained in the paper substrate formed from the recycled pulp. In an aspect, the recycled pulp is derived from recycled newsprint.

In another aspect, the fibrous substrate comprises virgin pulp (i.e., pulp which is not derived from a recycled material). In a further aspect, the fibrous substrate may comprise a mixture of recycled pulp and virgin pulp.

In an embodiment, the paper substrate has opposing first and second surfaces. The barrier coating composition may be coated on the first surface, the second surface, or both. In an advantageous embodiment, the first surface is a surface which faces the interior of the paper product when it is formed into a three-dimensional product and the opposing second surface faces the exterior of the paper product. Thus, in an aspect in which the paper product is formed as food grade or pharmaceutical grade packaging, inside of which a foodstuff or pharmaceutical product or composition may be contained, the barrier coating reduces or prevents migration of mineral oil from the paper product to the foodstuff or pharmaceutical product or composition. The packaging may be in the form of a carton (e.g., milk and beverage cartons) or box (e.g., a cereal box) and the like.

The first and/or second surfaces may have other intermediary coatings or layers between each surface and the barrier coating.

Thus, in another advantageous aspect in which the paper product is formable or formed into a three-dimensional product, which may be suitable as food grade or pharmaceutical grade packaging, at least a portion of a first interior facing surface of the paper substrate is coated with a barrier coating according to the present disclosure, and a second exterior facing surface of the paper substrate is coated or printed with an ink-based product. In this aspect, the paper substrate may be derived from recycled pulp containing mineral oil and/or the ink-based product may comprise mineral oil.

Barrier coated paper products of the present disclosure include brown corrugated boxes, flexible packaging including retail and shopping bags, food and hygiene bags and sacks, milk and beverage cartons, boxes suitable for cereals and the like, self adhesive labels, disposable cups and containers, envelopes, cigarette paper and bible paper.

### Mineral oil transmission

By "mineral oil" is meant a group of refined mineral hydrocarbons, derived from a non-vegetable (i.e., mineral) source, particularly petroleum distillate, which may be divided into three classes: paraffinic oil, based on n-alkanes; naphthenic oil, based on cycloalkanes; and aromatic oils, based on aromatic hydrocarbons.

"Mineral oil hydrocarbons (MOH)" is an art-recognised term understood to refer to a mineral oil fraction comprising, without distinction, paraffinic, naphthenic and aromatic hydrocarbons.

"Mineral oil saturated hydrocarbons (MOSH)" is an art-recognised term used to refer to a mineral oil fraction comprising paraffinic and naphthenic hydrocarbons.

"Mineral oil aromatic hydrocarbons (MOAH)" is an art-recognised term used to refer to a mineral fraction comprising aromatic hydrocarbons.

MOH typically comprise 5-25% MOAH, with the balance MOSH.

Medium and low viscosity MOH comprise C₁₀-C₂₅ hydrocarbons having a kinematic viscosity at 100°C from 3-9 cSt, and molecular weights between 300-500. In an embodiment, the mineral oil comprises C₁₂-C₂₅ hydrocarbons, for example C12-C24 hydrocarbons, for example C14 -C22 hydrocarbons, for example C16-C22 hydrocarbons, for example, C18-C22 hydrocarbons.

The mineral oil may be derived from recycled pulp, from which the paper products of the present invention may be made. For example, the mineral oil may be derived from printing inks.

Liquid phase mineral oil transmission through the barrier coating is measured in accordance with the following procedure.
1. coat the barrier on the reverse of a GD board;
2. print an ink doped with 20 percent by weight diosopropylnaphthyl (DIPN) on the face of the board;
3. make a sandwich of two of these boards with a layer of absorbent carbon in the middle, such that the barrier coatings are adjacent to the absorbent carbon;
4. incubate at 50°C;
5. solvent extract DIPN from the absorbent carbon sandwich between the two boards;
6. measure the peak area compared with known standards using gas chromatography.

Vapour phase mineral oil transmission may be determined by the following method. A barrier coated paper board product is prepared. The barrier coated samples are first cut in to circles of diameter 62.5 mm. The samples are left in a fume cupboard overnight prior to testing. Cotton wool pads of standard size are place in the bottom of a sealable beaker (a PAYNE cup). Approximately 10 ml of n-heptane are placed on to the cotton wool pad. This is then covered by the barrier coated samples and the edges are sealed. This is then weighed accurately to 4 decimal places and this is taken as time zero. The sealed beakers are left to stand in the fume cupboard and reweighed after 24 hours. As the volatile material escapes through the board, this results in a weight loss. Mineral oil vapour transmission rates (OVTR) are given as gsm per day.

### The coating process

The total coat weight of the coating formed in the first and second aspect may be from about 1 to about 30 gsm. For example, from about 3 to about 20 gsm, for example, from about 4 to about 15 gsm, for example, from about 5 to about 15 gsm, for example, from about 5 to about 12 gsm, for example, from about 5 to about 10 gsm.

By "gsm" is meant grams per square metre (g/m²).

The deposition of the coating compositions is by gravure printing. The applicant has found that if standard gravure printing rolls are used, the amount of coating composition which is deposited in insufficient to provide good barrier properties. In part, this may be due to the highly viscous nature of the coating compositions, which is not able to flow out of standard gravure cells during printing. After extensive efforts the applicant has found that specific types of gravure printing rolls need to be used to achieve commercially acceptable results. Thus, the gravure printing roll as used in the present invention typically has high cell volumes and large cell areas, which allow good deposition of the coating compositions onto the underlying substrate.

The cell volume is at least 50 cm³/m², preferably at least 60 cm³/m², for example from 60 to 200 cm³/m², more preferably from 60 to 150 cm³/m², even more preferably from 65 to 130 cm³/m², even more preferably from 70 to 120 cm³/m², with ranges such as from 75 to 120 cm³/m² being the most preferred.

These cell volumes are expressed as the volume of all cells per square meter of gravure roll, as is common in the art. As used herein, "cell volume" or "gravure cell volume" is therefore synonymous with total cell volume per unit area, unless it is clear from the context that individual cell volumes are being referred to.

As noted above, a further important criteria is the size of the opening of the cell, or cell width. The actual shape of gravure cells can vary, depending on the way in which the cells are formed (e.g. by a stylus, by laser etching etc.). Typical shapes for the individual gravure cells include rhombuses, squares, rectangles and hexagons (see Figure 1). It is also possible to use continuous gravure cells, such that the gravure roll is effectively made up of a series of ridges, which may be parallel (Figure 1c) or zig-zag (Figure 1e) shaped so as to form rhombuses connected by channels.

The term "cell width" as used herein represents the shortest distance between the walls of a cell which passes through the centre of the cell. Thus, the term "cell width" as used herein is different to the "cell opening" as usually reported for gravure cells comprising rhombus-shaped cells connected by a channel (this being typically the widest part of the cell".

For discrete cells, the cell width is the smallest dimension across the centre of the cell, which for rectangular cells would correspond to the length of the shorter sides of the rectangle. For continuous gravure cells formed from parallel ridges, the cell width corresponds to the distance be the ridges. For continuous gravure cells formed of zig-zag ridges forming rhombuses connected by channels, the cell width is the shortest distance between the ridges which passes through the centre of the rhomboidal cells.

Typically, the cell width of the gravure cells used in the invention is at least 100 µm, preferably at least 150 µm, more preferably at least 200 µm, even more preferably at least 250 µm, for example from 100 to 800 µm, preferably from 200 to 700 µm, more preferably from 250 to 650 µm, even more preferably from 275 to 600 µm, most preferably from 300 to 600 µm.

The walls of the gravure cells are typically thin so as to ensure that the maximum amount of the surface of the gravure roll corresponds to cells capable of depositing the coating composition. Typically, the cell walls are at most 30 µm, preferably at most 25 µm, for example from 5 to 25 µm, preferably from 5 to 20 µm, more preferably from 5 to 15 µm.

Typically, the gravure cells are aligned so as to ensure that they have a high cell width. Thus, the angle of compression is typically around 45°. Preferred angles include from 25° to 65°, more preferably from 30° to 60°.

Typically, the gravure cells are deeper than conventional gravure printing rolls, to ensure that high cell volumes are obtained. Thus, typically the cell depth is at least 60 µm, preferably at least 70 µm, more preferably at least 80 µm.

In principle, there is no limit to the cell depth, providing the cell is strong enough to allow printing. However, as the cells are wide and the cell walls are thin, a balance needs to be struck to ensure that the cell walls are strong enough to withstand printing. This, typically, the gravure cells have a maximum depth of 300 µm, preferably 250 µm, more preferably 200 µm. Preferred ranges of cell depths therefore include 60 to 300 µm, more preferably from 70 to 250 µm, more preferably 70 to 200 µm, even more preferably 80 to 175 µm.

Typically, the printing cells used in the invention are formed by laser etching rather than using a stylus. However should a stylus be used, any stylus angle can in principle be used providing it produces a printing roll having the desired cell volume and cell width.

Typically, the cells in the gravure printing roll used in the invention are larger than conventional gravure printing cells. As a result, the printing rolls typically contain fewer cells. Thus, typically the printing rolls contain less than 30 cells (lines) per cm, preferably less than 25 cells (lines) per cm, even more preferably less than 20 cells (lines) per cm, typically from 5 to 20 cells (lines) per cm, preferably from 8 to 15 cells (lines) per cm.

The various dimensions of the cells (cell width, cell depth, wall thickness) can be measured by any suitable means including measurements taken from micrographs. However, commercially available devices can be used to take the measurements, such as Checkmaster II (Heimann GmbH) and Hommel Tester T1000 (Hommelwerke GmbH). All measurements are preferably made in accordance with DIN ISO 9001.

Typical gravure cells that can be used in the process of the present invention are shown in Figure 1.
Figure 1a shows gravure cells which are approximately square, with cell walls having a thickness of about 20 µm, the cell depth is approximately 150 µm, and the cell width is approximately 425 µm.
Figure 1b shows gravure cells which are approximately hexagonal, with cell walls having a thickness of about 20 µm, the cell depth is approximately 140 µm, and the cell width is approximately 350 µm. This configuration is sometimes referred to as a Wabe cell.
Figure 1c shows continuous cells separated by parallel walls. The walls are about 225 µm thick, the cells are about 375 µm wide and about 245 µm deep. These continuous cells are sometimes referred to as Haschur cells.
Figure 1d shows an alternative type of Haschur cell, in which the continuous cells are divided into rectangles by thin walls.
Figure 1e shows a form of continuous gravure cell in which the walls are zig zag shaped so as to form a series of rhombuses.

The larger cells used in the printing processes of the invention are capable of depositing high levels of the coating composition. Cells having a large depth are used to provide enough coating, but the cells also need to be the correct shape to facilitate deposition of the coating. Surprisingly, the applicant has found that using cells having the large cell widths and cell volumes as described herein, coating compositions having the typical viscosities disclosed herein can be deposited at levels sufficient to achieve commercially viable barrier coatings.

Thus, in preferred aspect, the invention relates to processes in which the coating composition is deposited at levels sufficient to form a coating having a basis weight of at least 5 gsm when dried.

More preferably, the coating composition is deposited at levels sufficient to form a coating having a basis weight of at least 6 gsm, more preferably at least 7 gsm, even more preferably at least 8 gsm, even more preferably at least 9 gsm and most preferably at least 10 gsm, when dried.

The applicant has found that when using inorganic particulate having a high shape factor (e.g. as defined above such as a shape factor equal to or greater than about 10), the transmission rates of thick coatings can be surprisingly high depending on the polymer used. In other words, inorganic particulates having a high shape factor can given lower barrier performance when deposited as a thick coating than when the same composition is deposited as a thin coating. Without wishing to be bound by theory, it is possible that the inorganic particulate particles in the thick coatings are not stacking in a planar fashion one on top of the other aligned in the plan of the coating, but rather some are oriented such that the plane of the plate is perpendicular to the plane of the coating (or at least rotated out of the plane of the coating to a significant extent). When aligned edge on in this way, the barrier properties are significantly reduced. This incorrect alignment is made possible by the thicker coating, allowing the plate-like particles room to rotate.

Thus, in aspects where the particulate material has a high shape factor as set out above, it is preferred that the coating is deposited at levels of from 3 to 8 gsm (based on the dried weight of the coating), preferably from 3 to 7 gsm, even more preferably from 3 to 6 gsm. If necessary, multiple (thin) coatings can be applied to provide a (thick) coating having the desired barrier properties.

Based on the teaching provided herein, the skilled person would be able to devise a suitable gravure cylinder (i.e. cell volumes, cell widths, cell depth etc.) and optimised a coating composition (e.g. viscosity etc.) in order to achieve these levels of deposition without undue burden.

After deposition on the paper substrate, the coating may optionally be heated to aid in drying. For example, the coating may be heated to a temperature of from 20 to 80°C, preferably 30 to 80°C, more preferably 40 to 70°C.

The process of the first aspect present invention is capable of forming an effective barrier coating in one step (i.e. after printing one layer of the coating composition). However, pinholes can occur, which undermine the barrier properties. It is therefore preferred to use at least two printing steps, for example two, three or four. Preferably, two printing steps are used.

When applied in a series of coating layers according to the first aspect, the same or variable compositions can be used for each layer. For example, in one embodiment, a first layer of a barrier coating comprising only polyvinyl alcohol binder may be applied to the substrate followed by a top coat of a barrier coating composition comprising polyvinyl alcohol binder and an inorganic particulate.

In an alternative embodiment, two layers of a barrier coating comprising the polyvinyl alcohol binder and inorganic particulate may be applied one on top of the other. In such embodiments, the compositions in the first and second layers can be the same or different. For example, the first layer may contain a cheaper formulation and optionally coarser inorganic particulate in the coating composition.

When using multiple printing steps in the process of the first aspect, it is preferred that the final composition to be printed has a lower viscosity than the compositions applied in the preceding steps. Compositions having a lower viscosity tend to flow better from the gravure printing roll. Consequently, this ensures that the outermost layer is more even.

The second aspect of the invention is of course a multilayer printing process comprising at least three steps. As noted above, the third composition which corresponds to the outermost layer typically has a lower viscosity to ensure a more even coating is formed.

The first and third compositions are typically applied at levels similar to the first aspect, as set out above. Typically, the first composition is applied to form a thicker layer, as this is in contact with the underlying substrate. Generally, the second composition is applied as thinner layers, and optionally multiple thin layers of the second composition can be applied, to ensure better adhesion. Typically, the second composition is applied at levels to ensure a dried layer having 3 to 10 gsm, preferably 4 to 8 gsm, more preferably 5 to 7 gsm.

As noted above, the second composition can comprise small amounts of polyvinyl alcohol to act as a binder. In preferred aspects, multiple layers of the second composition can be applied with layers of the first or third composition applied in between. For example, preferred sequences for the coating steps comprise: first composition; second composition; third composition; second composition; third composition, or alternatively first composition; second composition; first composition; second composition; third composition.

Typical examples of the process used in the second aspect include:
25% w/v solution of 8-88 Mowiol PVOH; slurry of neat inorganic particulate (e.g. kaolin); 25 % w/v solution of 8-88 Mowiol PVOH,
25% w/v solution of 8-88 Mowiol PVOH; slurry of neat inorganic particulate (e.g. kaolin); 15% w/v solution of 10-98 Mowiol PVOH, and
30-35% w/v solution of 5-88 Mowiol; slurry of neat inorganic particulate (e.g. kaolin); and 30-35% w/v solution of 5-88 Mowiol PVOH.

The barrier coating is typically on the internal surface of any three dimensional article formed from the paper substrate, such that it protects anything contained in the article from leaching of mineral oil or other contaminants in the paper substrate. After deposition of the barrier coating on the paper substrate, the opposing surface may be patterned by a separate printing surface prior to or after formation of the three dimensional article from the paper substrate.

An advantage of the printing processes of the present invention is that the barrier coating is rapidly formed on the paper substrate, without the need for any curing steps to cross link the coating or multiple passes through the print stations. Thus, in preferred embodiments, the decorative patterning may be applied to the opposing face of the paper substrate immediately after application of the barrier coating.

For example, a paperboard substrate could be coated using the process of the invention and then fed directly into a second printing process to decorate the opposing surface using e.g. a gravure or flexographic printing process. In this way, paperboard products such as cereal boxes can be formed in a single, in-line printing process, which have a barrier coating on the internal surface and the branding and nutritional information on the external surface.

The present invention is illustrated with reference to the following nonlimiting examples.

### EXAMPLES

### Example 1 (REFERENCE)

A 12 % w/v solution of polyvinyl alcohol from Mowiol (grade 23-88 - solution viscosity -2.1 Pa.s) was coated onto the reverse of MCM board using the gravure printing cylinders having the specifications as set out in the table below. The coating weight was approximately 4 gsm.

The first cylinder (Example 1b) was a conventional cylinder typically used to apply standard metal inks.

The second cylinder (Example 1c) was a Haschur cylinder having rectangular cells (Figure 1d), while the third cylinder (Example 1d) was a Wabe cylinder having hexagonal cells (Figure 1b).

After printing, the heptane vapour transmission rate was measured using the methodology described above. The results are shown in the table below:

| **Example** | **Cell Volume (cm³/m²)** | **Cell Depth (µm)** | **Lines per cm** | **Number of coats** | **Weight loss (mg)** |
|---|---|---|---|---|---|
| 1a | - | - | - | - | 6321 |
| 1b | 35 | 56 | 40 | 2 | 5121 |
| 1c | 75 | 75 | 30 | 1 | 2223 |
| 1d | 67 | 75 | 30 | 1 | 785 |

The results show that increasing the cell volume and depth provides coatings with superior barrier properties. Thus, the conventional gravure roll (Example 1b) showed little improvement in the weight loss even after two coats. Despite having only one coat, the bespoke gravure rolls provided coatings having significantly improved barrier properties. The Wabe cylinder provided the best results, possibly due to the improved packing of the hexagonal cells.

### Example 2 (REFERENCE)

A12% w/v solution of Mowiol 28-99 polyvinyl alcohol (viscosity -5-7 Pa.s) was printed using gravure cylinders having the following characteristics:
Cylinder 1
   - cell volume 109 cm³/m²
   - cell depth 140 µm
   - 10 lines per cm
Cylinder 2
   - cell volume 99 cm³/m²
   - 20 lines per cm (hexagonal cells)

The mixture was found to be too viscous and failed to spread out after deposition on the substrate. The resultant coating consisted of a discontinuous array of dry droplets, each adhering firmly to the board but separated from the others.

### Example 3

Mixtures of polyvinyl alcohol and inorganic particulate were gravure printed on a paper board substrate. The mixtures comprised either Mowiol 28-99 polyvinyl alcohol, or a 50:50 w/w mixture of Mowiol 28-99 polyvinyl alcohol with kaolin clay. The liquid phase mineral oil transmission rates were measured using the DIPN test set out above. The following results were obtained:

| **Example** | **Coating** | **DIPN from orange peak (ppm)** |
|---|---|---|
| 3a | None | - |
| 3b | PVOH | 5 |
| 3c | PVOH/Kaolin A | 1.5 |
| 3d | PVOH/Kaolin B | 3 |

The results show that including the inorganic particulate reduces the transmission rate as compared to the polyvinyl alcohol alone. Kaolin A was found to give better barrier properties as compared to Kaolin B.

### Example 4

Compositions formed from 50:50 w/w mixtures of Mowiol polyvinyl alcohol and kaolin inorganic particulate were gravure printed on board substrates. The OVTR of the printed substrates were then evaluated using the protocol set out above, and the results are shown in the table below:

| **Example** | **PVOH** | **Kaolin** | **Total solids (% w/v)** | **Coating weight (gsm)** | **OVTR (g/m².24hrs)** |
|---|---|---|---|---|---|
| 4a | 5-88 | Kaolin A | 31.5 | 6 | 6.75 |
| 4b | 5-88 | Kaolin A | 31.5 | 9 | 5.73 |
| 4c | 8-88 | Kaolin A | 25.33 | 5 | 12.99 |
| 4d | 8-88 | Kaolin A | 25.33 | 7 | 8.06 |
| 4e | 8-88 | Kaolin A | 25.33 | 8 | 8.06 |
| 4f | 8-88 | Kaolin A | 25.33 | 10 | 8.02 |
| 4g | 8-88 | Kaolin B | 26 | 6 | 6.41 |
| 4h | 18-88 | Kaolin A | 19 | 4 | 27.61 |
| 4i | 18-88 | Kaolin A | 19 | 7 | 15.86 |
| 4j | 18-88 | Kaolin A | 23 | 4 | 15.7 |
| 4k | 18-88 | Kaolin A | 23 | 5 | 10.1 |
| 4l | 18-88 | Kaolin A | 23 | 9 | 6.32 |
| 4m | 18-88 | Kaolin B | 18.2 | 5 | 8.84 |
| 4n | 18-88 | Kaolin B | 21.1 | 5 | 11.26 |
| 4o | 10-98 | Kaolin A | 20 | 6 | 7.2 |
| 4p | 10-98 | Kaolin A | 29 | 6 | 6.02 |
| 4q | 10-98 | Kaolin B | 22.5 | 6 | 10.91 |
| 4r | 10-98 | Kaolin B | 22.5 | 10 | 6.92 |
| 4s | 10-98 | Kaolin B | 25.8 | 6 | 7.55 |
| 4t | 20-98 | Kaolin A | 20 | 4 | 10.99 |
| 4u | 20-98 | Kaolin B | 18 | 5 | 6.77 |
| 4v | 20-98 | Kaolin B | 18 | 9 | 5.07 |

## Claims

1. A process for forming a coated paper comprising:
providing a paper substrate;
gravure printing a coating composition on at least one surface of the paper substrate, wherein the coating composition comprises polyvinyl alcohol and an inorganic particulate,
**characterised in that**
the gravure cell volume is at least 50 cm³/m².

2. A process of claim 1 wherein the gravure cell depth is at least 60 µm.

3. The process of any preceding claim, wherein the weight ratio of inorganic particulate to polyvinyl alcohol in the coating composition ranges from 4:1 to 1:4.

4. The process of any preceding claim, wherein the coating composition comprises from 15 to 35 % w/v solids.

5. The process of any preceding claim, wherein the coating composition is deposited at levels sufficient to form a coating having a basis weight of at least 5 gsm when dried.

6. A process for forming a coated paper comprising:
providing a paper substrate;
gravure printing a first composition comprising a polyvinyl alcohol on at least one surface of the paper substrate;
gravure printing a second composition comprising an inorganic particulate on the polyvinyl alcohol layer; and
gravure printing a third composition comprising a polyvinyl alcohol on the layer of inorganic particulate,
wherein the gravure cell volume is from 60 to 130 cm³/m².

7. A process of claim 6 wherein the gravure cell depth is at least 80 µm.

8. A process of claim 6 wherein the gravure cell width is at least 250 µm.

9. The process of any of claims 6-8, wherein the first and third composition do not contain any inorganic particulate.

10. The process of any of claims 6-9, wherein the second composition comprises 0-20 wt% polyvinyl alcohol, at least 60 wt% inorganic particulate, and the remainder water.

11. The process of any of claims 6-10, wherein the third composition has a lower viscosity than the first composition.

12. The process of any preceding claim, wherein the polyvinyl alcohol is from 85 to 99 wt % hydrolysed.

13. The process of any preceding claim, wherein the inorganic particulate is a phyllosilicate.

14. The process of any preceding claim, wherein the inorganic particulate material is kaolin.

15. The process of any preceding claim, wherein after the coating is gravure printed on a first surface, the coated substrate is fed directly into a second printing process to decorate the opposing surface.

## Patentansprüche

1. Verfahren zur Herstellung eines beschichteten Papiers, umfassend:
Bereitstellen eines Papiersubstrats;
Tiefdrucken einer Beschichtungszusammensetzung auf mindestens eine Oberfläche des Papiersubstrats, wobei die Beschichtungszusammensetzung Polyvinylalkohol und einen anorganischen teilchenförmigen Stoff umfasst,
**dadurch gekennzeichnet, dass**
das Volumen der Tiefdrucknäpfchen mindestens 50 cm³/m² beträgt.

2. Verfahren nach Anspruch 1, wobei die Tiefe der Tiefdrucknäpfchen mindestens 60 µm beträgt.

3. Verfahren nach einem vorstehenden Anspruch, wobei das Gewichtsverhältnis von anorganischem teilchenförmigem Stoff zu Polyvinylalkohol in der Beschichtungszusammensetzung im Bereich von 4:1 bis 1:4 liegt.

4. Verfahren nach einem vorstehenden Anspruch, wobei die Beschichtungszusammensetzung 15 bis 35 % Gew./Vol. Feststoffe umfasst.

5. Verfahren nach einem vorstehenden Anspruch, wobei die Beschichtungszusammensetzung in Mengen abgeschieden wird, die ausreichen, um nach dem Trocknen eine Beschichtung mit einem Flächengewicht von mindestens 5 g/m² zu bilden.

6. Verfahren zur Bildung eines beschichteten Papiers, umfassend:
Bereitstellen eines Papiersubstrats;
Tiefdrucken einer ersten Zusammensetzung, die einen Polyvinylalkohol umfasst, auf mindestens eine Oberfläche des Papiersubstrats;
Tiefdrucken einer zweiten Zusammensetzung, die einen anorganischen teilchenförmigen Stoff umfasst, auf die Polyvinylalkoholschicht; und
Tiefdrucken einer dritten Zusammensetzung, die einen Polyvinylalkohol umfasst, auf die Schicht aus anorganischem teilchenförmigem Stoff,
wobei das Volumen der Tiefdrucknäpfchen 60 bis 130 cm³/m² beträgt.

7. Verfahren nach Anspruch 6, wobei die Tiefe der Tiefdrucknäpfchen mindestens 80 µm beträgt.

8. Verfahren nach Anspruch 6, wobei die Breite der Tiefdrucknäpfchen mindestens 250 µm beträgt.

9. Verfahren nach einem der Ansprüche 6-8, wobei die erste und die dritte Zusammensetzung keinen anorganischen teilchenförmigen Stoff enthalten.

10. Verfahren nach einem der Ansprüche 6-9, wobei die zweite Zusammensetzung 0-20 Gew.-% Polyvinylalkohol, mindestens 60 Gew.-% anorganischen teilchenförmigen Stoff und den Rest Wasser umfasst.

11. Verfahren nach einem der Ansprüche 6-10, wobei die dritte Zusammensetzung eine niedrigere Viskosität als die erste Zusammensetzung aufweist.

12. Verfahren nach einem vorstehenden Anspruch, wobei der Polyvinylalkohol 85 bis 99 Gew.-% hydrolysiert ist.

13. Verfahren nach einem vorstehenden Anspruch, wobei der anorganische teilchenförmige Stoff ein Phyllosilikat ist.

14. Verfahren nach einem vorstehenden Anspruch, wobei das anorganische teilchenförmige Material Kaolin ist.

15. Verfahren nach einem vorstehenden Anspruch, wobei nach dem Tiefdrucken der Beschichtung auf eine erste Oberfläche das beschichtete Substrat direkt in ein zweites Druckverfahren eingeführt wird, um die gegenüberliegende Oberfläche zu dekorieren.

## Revendications

1. Processus de formation d'un papier couché comprenant les étapes consistant à :
fournir un substrat en papier ;
imprimer par héliogravure une composition de revêtement sur au moins une surface du substrat en papier, dans lequel la composition de revêtement comprend de l'alcool polyvinylique et une particule inorganique,
**caractérisé en ce que**
le volume de cellule d'héliogravure est d'au moins 50 cm³/m².

2. Processus selon la revendication 1, dans lequel la profondeur de cellule d'héliogravure est d'au moins 60 µm.

3. Processus selon l'une quelconque des revendications précédentes, dans lequel le rapport pondéral d'une particule inorganique sur l'alcool polyvinylique dans la composition de revêtement va de 4 : 1 à 1 : 4.

4. Processus selon l'une quelconque des revendications précédentes, dans lequel la composition de revêtement comprend de 15 à 35 % en poids/volume de solides.

5. Processus selon l'une quelconque des revendications précédentes, dans lequel la composition de revêtement est déposée à des niveaux suffisants pour former un revêtement ayant un grammage d'au moins 5 g/m² après séchage.

6. Processus de formation d'un papier couché comprenant les étapes consistant à :
fournir un substrat en papier ;
imprimer par héliogravure une première composition comprenant un alcool polyvinylique sur au moins une surface du substrat en papier ;
imprimer par héliogravure une deuxième composition comprenant une particule inorganique sur la couche d'alcool polyvinylique ; et
imprimer par héliogravure une troisième composition comprenant un alcool polyvinylique sur la couche de particule inorganique,
dans lequel le volume de cellule d'héliogravure est de 60 à 130 cm³/m².

7. Processus selon la revendication 6, dans lequel la profondeur de cellule d'héliogravure est d'au moins 80 µm.

8. Processus selon la revendication 6, dans lequel la largeur de cellule d'héliogravure est d'au moins 250 µm.

9. Processus selon l'une quelconque des revendications 6 à 8, dans lequel les première et troisième compositions ne contiennent aucune particule inorganique.

10. Processus selon l'une quelconque des revendications 6 à 9, dans lequel la deuxième composition comprend de 0 à 20 % en poids d'alcool polyvinylique, au moins 60 % en poids de particule inorganique, et le reste d'eau.

11. Processus selon l'une quelconque des revendications 6 à 10, dans lequel la troisième composition a une viscosité inférieure à la première composition.

12. Processus selon l'une quelconque des revendications précédentes, dans lequel l'alcool polyvinylique est hydrolysé pour 85 à 99 % en poids.

13. Processus selon l'une quelconque des revendications précédentes, dans lequel la particule inorganique est un phyllosilicate.

14. Processus selon l'une quelconque des revendications précédentes, dans lequel le matériau particulaire inorganique est du kaolin.

15. Processus selon l'une quelconque des revendications précédentes, dans lequel après que le revêtement a été imprimé par héliogravure sur une première surface, le substrat revêtu est alimenté directement vers un second processus d'impression pour décorer la surface opposée.
